# EUROPÄISCHE PATENTSCHRIFT

(11) **EP 0 553 379 B1**
(45) Veröffentlichungstag und Bekanntmachung des Hinweises auf die Patenterteilung: **01.05.1996**
(21) Anmeldenummer: 92101546.7
(22) Anmeldetag: 30.01.1992
(51) Int. Cl.: H04J 3/16, H04Q 11/04

(54) **Verfahren zur Begrenzung der Rate von Nachrichtenzellen einer virtuellen Verbindung**
Device for limiting the flowrate of information cells in a virtual connection
Dispositif limiteur de débit de cellules de données dans un circuit virtuel

(43) Veröffentlichungstag der Anmeldung: 04.08.1993
(73) Patentinhaber: SIEMENS AKTIENGESELLSCHAFT, D-80333 München (DE)
(72) Erfinder: Grabenhorst, Rolf, Dipl.-Ing., W-8000 München 60 (DE); Niestegge, Gerd, Dr., W-8000 München 70 (DE); Schröder, Eckhard, Dipl.-Ing., W-8000 München 19 (DE)

(56) Entgegenhaltungen:
- DE-A- 2 625 528
- PROCEEDINGS IEEE INTERNATIONAL SWITCHING SYMPOSIUM 15.Marz 1987 PHOENIX (US) Seiten 462-469. M.WM.BECKNER ET AL." A protocol and prototype for broadband subscriver access to ISDNs.
- IEEE JOURNAL ON SELECTED AREAS IN COMMUNICATION.Bd.9 Nr.8, 1 Okt. 1991 NEW YORK (US) Seiten 1265-1279.MANOLIS KATEVENIS ET AL. Weighted round-robin cell multiplexing in a general-purpose ATM swith chip.

## Beschreibung

In Nachrichtensystemen, in denen Daten im Datenteil von Nachrichtenzellen im Zuge eines asynchronen Übertragungsverfahrens übertragen werden, können gleichermaßen Datenverbindungen mit hohen Datenraten als auch Datenverbindungen mit niedrigen Datenraten angeboten werden. Dabei kann indessen die Übertragung von umfangreichen Datensätzen, wie sie beispielsweise bei der Übertragung von Bildvorlagen in digitalisierter Form auftritt mit einer Datenrate, die an der Grenze der Transportdatenrate des Übertragungssystems liegt, zu Blockierungen beim Aufbau von anderen Verbindungen führen; darüber hinaus können Datenverbindungen, die einen höheren Spitzenwert der Datenrate als die Transportdatenrate des Übertragungssystems aufweisen, nicht angeboten werden. Weiter muß bei Verbindungen mit hohen Datenraten mit einem überproportionalen Gebührenaufwand gerechnet werden, auch wenn in vielen Fällen eine Übertragung in kürzest möglicher Zeit gar nicht erforderlich ist.

Bei Multiplexsystemen besteht das Problem, ein Verfahren anzugeben, demzufolge der Zugang von von einer Mehrzahl von Datenendeinrichtungen abgegebenen Daten auf eine den Datenendeinrichtungen gemeinsame Verbindungsleitung geregelt wird und demzufolge die von einer Datenendeinrichtung mit einer - über einen längeren Zeitraum betrachtet - nicht konstanten Rate abgegebenen Daten mit einer zwischen dem Mittelwert und dem Spitzenwert liegenden Datenrate auf die Verbindungleitung weitergeleitet werden.

Dieses Problem wird bekanntlich gelöst durch ein Verfahren zur Regelung des Zugangs von eine vorgegebene Anzahl von Daten aufweisenden Datenblöcken, die einer Mehrzahl von Datenverbindungen zugehören, auf eine Verbindungsleitung, die in Zeitschlitzen jeweils eine einen den Datenblock aufnehmenden Datenteil und einen diesem vorangestellten, die jeweilige Datenverbindung bezeichnenden Kopf aufweisende Nachrichtenzelle nach einem asynchronen Übertragungsverfahren zu transportieren vermag, wobei
- die Datenblöcke in datenverbindungsindividuelle Pufferspeicher eingeschrieben werden,
- für jede Datenverbindung eine jeweilige Datenblockrate festgelegt wird,
- für jede Datenverbindung ein Zähler vorgesehen ist.

Ein solches Verfahren ist aus einem Aufsatz in "International Zürich Seminar on Digital Communications", März 1986, "New Directions in Communications" A.3.1 bis A.3.8, von J. B. Turner bekannt. Dort ist in einem Vermittlungsknoten eines Nachrichtenzellen nach einem asynchronen Übertragungsverfahren übertragenden Breitbandvermittlungssystems jeder damit verbundenen Teilnehmereinrichtung ein Vorwärts-/Rückwärtszähler zuzuordnet, welcher die von der jeweiligen Teilnehmereinrichtung gesendeten Nachrichtenzellen zählt und den momentanen Zählerstand entsprechend der von der jeweiligen Teilnehmereinrichtung festgelegten Übertragungsgeschwindigkeit zu bestimmten Zeitpunkten erniedrigt. Überschreitet dabei der momentane Zählerstand einen von der jeweiligen Teilnehmereinrichtung vorgebbaren Wert, so erkennt der Vermittlungsknoten eine Überlast ("Leaky-Bucket-Verfahren).

Ein solche Leaky-Bucket-Verfahren bewirkt eine Begrenzung des festgelegten Spitzenwertes der Rate der von einer Teilnehmereinrichtung gesendeten Nachrichtenzellen, wobei Nachrichtenzellen, die zu einer Überschreitung der festgelegten Rate führen, verworfen werden; eine Reduzierung der von einer Teilnehmereinrichtung gesendeten Rate von Nachrichtenzellen unter den Spitzenwert findet nicht statt. Darüber hinaus bringt das Leaky-Bucket-Verfahren für sich keine Lösung von Zugriffskonflikten auf eine mehreren Teilnehmereinrichtungen gemeinsame Leitung mit sich.

Diese Probleme werden gelöst durch den kennzeichnenden Teil des Anspruchs 1. Die Erfindung bringt die Vorteile mit sich, daß die von einer Datenendeinrichtung abgegebenen Daten, deren Spitzendatenrate die maximale Transportdatenrate der Verbindungsleitung (ATM-Pipe) auf der die Daten übertragen werden sollen, übersteigt, übertragen werden, wenn der Mittelwert der Datenrate dieser Daten niedriger als die Transportdatenrate liegt und weiter daß von einer Datenendeinrichtung burstartig abgegebene Folgen von Daten geglättet werden, was einerseits einer Verstopfung einer einer Mehrzahl von Datenendgeräten gemeinsamen Verbindungsleitung entgegenwirkt und andererseits zu einer Steigerung der Durchsatzrate in der die Daten durchschaltenden Vermittlungseinrichtung führt und weiter daß neben bereits bestehenden Verbindungen gegebenenfalls weitere Verbindungen aufbaubar sind und darüber hinaus, daß eine gerechte Zuteilung des Zugangs von Daten unter Berücksichtigung der für die jeweiligen Verbindungen festgelegten Datenrate zu einer einer Mehrzahl von Verbindungen gemeinsamen Verbindungsleitung erzielt wird und schließlich, daß ein Datengeräteteilnehmer bei einem überproportionalen Anstieg des Gebührentarifs mit der festgelegten Datenrate gegebenenfalls einen günstigeren Gebührentarif in Anspruch nehmen kann.

Weitere Ausgestaltungen der Erfindung betreffen Ausführungsformen, bei denen Datenendeinrichtungen die Daten entweder als Bestandteil einer Nachrichtenzelle bzw. in Form von Datenblöcken abgeben, die erst unmittelbar vor der Weiterleitung auf die Verbindungsleitung in Nachrichtenzellen paketiert werden. Zur Ausnutzung der vollen Transportkapazität der Nachrichtenzellen wird vorgeschlagen, so viele Daten in eine Nachrichtenzelle aufzunehmen, wie eine Nachrichtenzelle in ihrem Datenteil aufzunehmen vermag. Ein ausgeglichenes Angebot von Datenverbindungen ergibt sich bei Festlegung der gleichen Datenblockrate für sämtliche Datenverbindungen unter Berücksichtigung der gesamten Transportkapazität der Verbindungsleitung.

Die Erfindung wird nun als Ausführungsbeispiel in zum Verständnis erforderlichem Umfang beschrieben.

Dabei zeigen:
- Fig. 1: die schematische Darstellung einer Einrichtung zur Durchführung des erfindungsgemäßen Verfahrens
- Fig. 2: ein Flußdiagramm des erfindungsgemäßen Verfahrens.

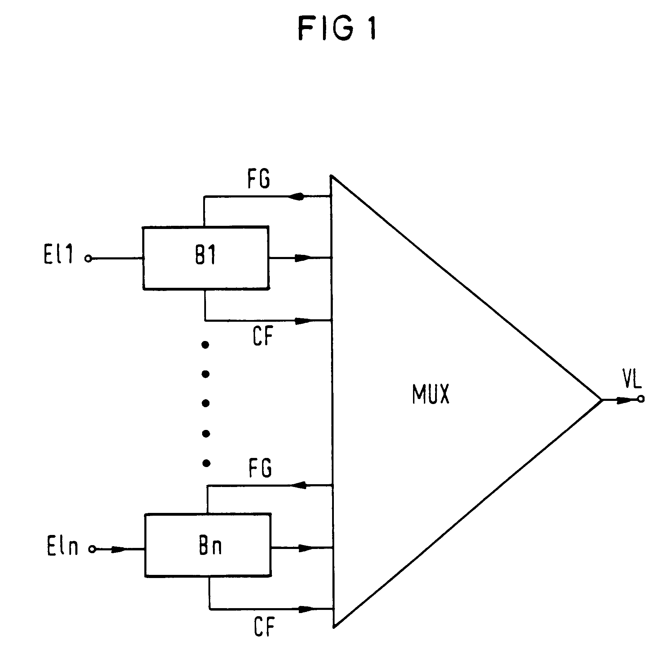

Figur 1 zeigt eine Einrichtung, die von nicht näher dargestellten Datenendeinrichtungen auf zugehörige Eingangsleitungen EL1... ELn abgegebene Daten in einer Zusammenfassungseinrichtung MUX zu einem Datenstrom zusammenfaßt (z.B. ein sogenanntes gateway in einem customer premises network (CPN)) und über eine diesen Datenstrom führende Verbindungsleitung VL zu einer entfernten, nicht näher dargestellten Empfangseinrichtung überträgt. Der Datenstrom auf der Verbindungsleitung wird nach einem asynchronen Übertragungsverfahren transportiert, bei dem die Daten in einen Datenteil mit vorgegebener Länge und einen diesem vorangestellten, die jeweilige Datenverbindung bezeichnenden Kopf aufweisenden Nachrichtenzellen übertragen werden. Jeder Eingangsleitung ist ein Pufferspeicher B1 ... Bn zugeordnet, der als FIFO-Speicher organisiert ist und der im Stande ist einen umfangreichen, von der zugehörigen Datenendeinrichtung abgegebenen, eine Vielzahl von Daten umfassenden Datensatz wie z.B. eine fotographische Vorlage in digitalisierter Form zwischenzuspeichern. Die von den Datenendeinrichtungen abgegebenen Daten liegen entweder als eine vorgegebene Anzahl von Daten aufweisenden Datenblöcken oder entsprechend einer anderen Ausführungsform der Erfindung bereits in Form von Nachrichtenzellen vor. Die Pufferspeicher mögen jeweils über eine Verbindung CF an die Zusammenfassungseinrichtung ein Signal abgeben, solange in einem betreffenden Pufferspeicher Daten zwischengespeichert sind. Die Zusammenfassungseinrichtung vermag über eine jeweilige Verbindung FG einen betreffenden Pufferspeicher über eine jeweilige Zwischenleitung e1 ... en zur Freigabe eines eine vorgegebene Anzahl von Daten aufweisenden Datenblockes bzw. zur Freigabe einer Nachrichtenzelle zu veranlassen. Die Zusammenfassungseinrichtung weist für jede Eingangsleitung einen Zähler auf, der beispielsweise eine durch acht Bit darstellbare Anzahl von Zuständen einzunehmen vermag.

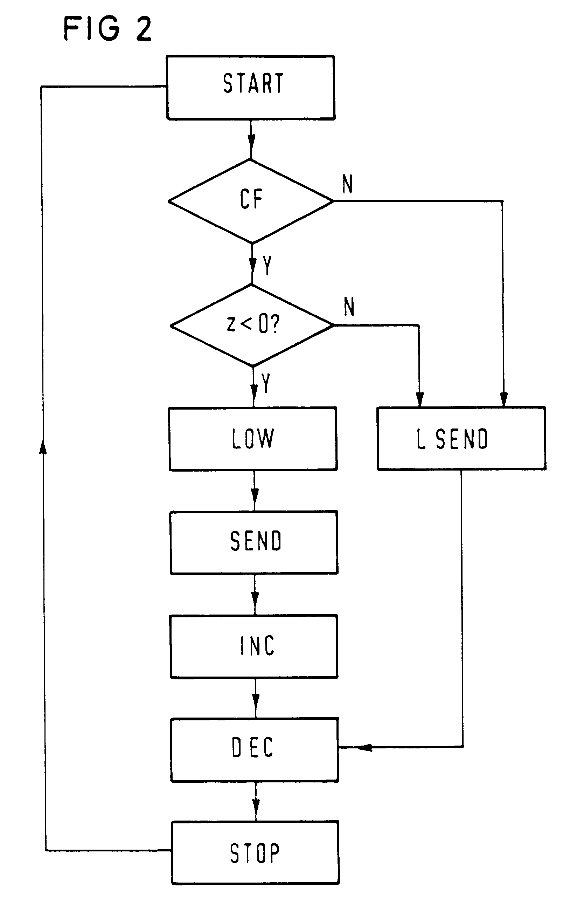

Die nähere Arbeitsweise der Zusammenfassungseinrichtung wird anhand des Flußdiagramms nach Figur 2 ersichtlich.
Figur 2 verdeutlicht typische, während eines Zeitschlitzes ablaufende Vorgänge. Im Zuge des Aufbaus jeder Datenverbindung wird für die Datenverbindung ein Inkrement festgesetzt, auf dessen Wert der zugehörige Zähler gesetzt wird. Das Inkrement kann als Wert dafür betrachtet werden, wieviele Nachrichtenzellen anderer Datenverbindungen im Mittel zwischen zwei Nachrichtenzellen der betrachteten Datenverbindung weitergeleitet werden können. So werden beispielsweise für einen Wert von drei für das Inkrement einer Datenverbindung zwischen zwei Nachrichtenzellen dieser Datenverbindung im Mittel drei Nachrichtenzellen anderer Datenverbindungen weitergeleitet, selbst wenn für die betrachtete Datenverbindung schon weitere Nachrichtenzellen bereitstehen. Gemäß Figur 2 werden in dem Entscheidungsfeld CF sämtliche Pufferspeicher auf das Vorhandensein von Datenblöcken abgefragt. Die Abfrage erfolgt vorzugsweise zyklisch in der Reihenfolge der Bezeichnungen der Eingangsleitungen. Für den Fall, daß keiner der Pufferspeicher einen Datenblock zwischengespeichert hat (N) wird mit dem Ausführungsfeld LSEND fortgefahren. Für den Fall, daß mindestens ein Pufferspeicher einen Datenblock zwischengespeichert hat (Y) wird entsprechend dem Entscheidungsfeld Z geprüft, ob die zugehörigen Zähler von Pufferspeichern, die gerade Datenblöcke zwischengespeichert haben einen vorgegebenen Zählerstand unterschreiten. Das Unterschreiten des vorgegebenen Wertes kann beispielsweise durch Unterschreiten des Zählerstandes Null gegeben sein. Bei einem Zähler, dessen Zustände durch eine Mehrzahl von Bits dargestellt sind, kann vorteilhafterweise das MSB (most significant bit) zur Auswertung der Unterschreitung des Wertes Null herangezogen werden. Dabei ist der Wert Null dann unterschritten, wenn das MSB einen hohen logischen Pegel aufweist. Hat keiner der Zähler den vorgegebenen Wert unterschritten (N) so wird mit dem Ausführungsfeld LSEND fortgefahren, bei dem bewirkt wird, daß eine Leerzelle auf die Verbindungsleitung weitergeleitet wird. Eine Leerzelle ist dadurch gegeben, daß sie in ihrem Datenteil keine Daten enthält.

Von dem Ausführungsfeld LSEND wird in dem Flußdiagramm mit dem Ausführungsfeld DEC fortgefahren. Zunächst soll jedoch mit dem weiteren Ablauf bei positivem Ergebnis (Y) in dem Entscheidungsfeld Z d.h., daß mindestens einer der Zähler den vorgegebenen Wert unterschritten hat, fortgefahren werden. In dem Ausführungsfeld LOW wird eine jeweilige Datenverbindung ermittelt, deren Zähler einen jeweiligen niedrigsten Zählerstand aufweist. Weisen während eines Zeitschlitzes gleichzeitig mehr als ein Zähler einen jeweiligen niedrigsten Zählerstand auf, kann so verfahren werden, daß für diejenige Datenverbindung ein Datenblock weiterleitet wird, die bei der zyklischen Abfrage in der Reihenfolge entsprechend den Bezeichnungen der Eingangsleitungen als erste auf die Datenverbindung folgt, für die zuletzt ein Datenblock weitergeleitet wurde. Aus dem zu dem jeweiligen ermittelten Zähler gehörigen Pufferspeicher wird entsprechend dem Ausführungsfeld SEND ein Datenblock auf die Verbindungsleitung weitergeleitet.

Ein Datenblock weist dabei allenfalls soviele Daten auf, wie sie der Datenteil einer Nachrichtenzelle aufzunehmen vermag. Entsprechend einer besonderen Ausführungsform der Erfindung werden die Datenblöcke in der Zusammenfassungseinrichtung in einer sämtlichen Datenverbindungen gemeinsamen Paketiereinrichtung in den Datenteil einer jeweiligen Nachrichtenzelle aufgenommen und weitergeleitet.
Zurückkommend auf Figur 2 wird in dem Ausführungsfeld INC der Zählerstand des Zählers, für dessen Datenverbindung gerade ein Datenblock weitergeleitet wurde um den der zugehörigen vereinbarten Datenblockrate entsprechenden Wert erhöht. Bei dem Ausführungsfeld DEC werden die Zähler sämtlicher Verbindungen, die während des aktuellen Zeitschlitzes keinen Datenblock weitergeleitet haben um den Wert "Eins" erniedrigt. Von dem Ausführungs feld STOP aus wird für den nächstfolgenden Zeitschlitz mit dem Ausführungsfeld START fortgefahren und das Flußdiagramm erneut durchlaufen. Aus der Beschreibung des Flußdiagramms wird ersichtlich, daß Datenverbindungen, die trotz Unterschreiten des vorgegebenen Zählerstandes des zugehörigen Zählers keinen Dater block ausgesendet haben, beispielsweise weil der Zähler einer anderen Datenverbindung einen niedrigeren Zählerstand ausgewiesen hat, in dem darauffolgenden Zeitschlitz einen weiter erniedrigten Zählerstand aufweisen und damit verbesserte Chancen für die Aussendung eines Datenblockes aufweisen. Nach der Weiterleitung eines Datenblockes für eine zunächst benachteiligte Datenverbindung weist der zugehörige Zähler nach Inkrementierung um den der festgelegten Datenblockrate entsprechenden Wert einen entsprechend niedrigeren Zählerstand auf, womit der vorgegebene Zählerstand entsprechend frühzeitiger unterschritten wird und damit für die betrachtete Datenverbindung die Freigabe zur Weiterleitung eines Datenblockes umso frühzeitiger erreicht wird womit sich im Mittel die vorgegebene Datenblockrate einstellt.

## Patentansprüche

1. Verfahren zur Regelung des Zugangs von eine vorgegebene Anzahl von Daten aufweisenden Datenblöcken, die einer Mehrzahl von Datenverbindungen zugehören, auf eine Verbindungsleitung (VL), die in Zeitschlitzen jeweils eine einen den Datenblock aufnehmenden Datenteil und einen diesem vorangestellten, die jeweilige Datenverbindung bezeichnenden Kopf aufweisende Nachrichtenzelle nach einem asynchronen Übertragungsverfahren zu transportieren vermag, wobei
- die Datenblöcke datenverbindungsindividuell Zwischengespeichert werden,
- für jede Datenverbindung eine jeweilige Datenblockrate festgelegt wird,
- für jede Datenverbindung ein Zähler vorgesehen ist,
dadurch gekennzeichnet, daß
- die Datenverbindungen, deren Zähler einen vorgegebenen Zählerstand unterschritten haben, zur Weiterleitung eines Datenblockes auf die Verbindungsleitung freigegeben werden,
- für eine jeweilige Datenverbindung, die in dem aktuellen Zeitschlitz einen jeweiligen niedrigsten Zählerstand aufweist, ein Datenblock aus dem zugehörigen Pufferspeicher auf die Verbindungsleitung weitergeleitet wird,
- der Zählerstand der Datenverbindung, für die während eines aktuellen Zeitschlitzes ein Datenblock auf die Verbindungsleitung weitergeleitet wird, um einen der zugehörigen Datenblockrate entsprechenden Wert inkrementiert wird,
- der Zählerstand der Datenverbindungen, für die während eines aktuellen Zeitschlitzes kein Datenblock weitergeleitet wird, dekrementiert wird.

2. Verfahren nach Anspruch 1,
wobei die Datenblöcke jeweils nach der Freigabe und vor der Weiterleitung auf die Verbindungsleitung in den Datenteil einer Nachrichtenzelle paketiert werden.

3. Verfahren nach Anspruch 1,
**dadurch gekennzeichnet**, daß die Datenblöcke jeweils Teil einer Nachrichtenzelle sind.

4. Verfahren nach einem der vorstehenden Ansprüche,
bei dem für jede Datenverbindung die gleiche Datenblockrate festgelegt wird.

5. Verfahren nach einem der vorstehenden Ansprüche,
bei dem die Datenblöcke jeweils die gleiche Anzahl von Daten aufweisen, wie sie der Datenteil einer Nachrichtenzelle aufzunehmen vermag.

6. Verfahren nach einem der vorstehenden Ansprüche,
bei dem noch nicht weitergeleitete Datenblöcke zwischengespeichert werden.

7. Verfahren nach Anspruch 6,
bei dem die Datenblöcke für jede Datenverbindung getrennt zwischengespeichert werden.

## Claims

1. Method for regulating the access of data blocks exhibiting a predetermined number of data, which belong to a plurality of data connections, to a trunk line (VL), which is capable of transporting in time slots, in each case one information cell exhibiting a data field accommodating the data block and a header, preceding the former, designating the respective data connection, in accordance with an asynchronous transmission method, in which method
- the data blocks are temporarily stored in a data-connection-individual manner,
- a respective data block rate is established for each data connection,
- a counter is provided for each data connection, characterised in that
- the data connections, the counters of which have dropped below a predetermined count, are released for forwarding a data block to the trunk line,
- a data block is forwarded from the associated buffer memory to the trunk line for a respective data connection which exhibits a respective lowest count in the current time slot,
- the count of the data connection, for which a data block is forwarded to the trunk line during a current time slot, is incremented by a value corresponding to the associated data block rate, and
- the count of the data connections, for which no data block is forwarded during a current time slot, is decremented.

2. Method according to Claim 1, wherein the data blocks are packeted in the data field of an information cell in each case after having been released and before being forwarded to the trunk line.

3. Method according to Claim 1, characterised in that the data blocks are in each case part of an information cell.

4. Method according to one of the preceding claims, wherein the same data block rate is defined for each data connection.

5. Method according to one of the preceding claims, wherein the data blocks in each case have the same number of data as the data field of an information cell is capable of accommodating.

6. Method according to one of the preceding claims, wherein data blocks not yet forwarded are temporarily stored.

7. Method according to Claim 6, wherein the data blocks are temporarily stored separately for each data connection.

## Revendications

1. Procédé de régulation de l'accès d'un nombre prescrit de blocs de données, qui comportent des données et dont font partie une pluralité de liaisons de données, à une ligne (VL) de jonction, qui peut transporter, dans des créneaux temporels, une cellule d'information comportant une partie de données recevant le bloc de données et un en-tête désignant la liaison de données et placé devant cette partie de données, suivant un procédé de transmission asynchrone, dans lequel
- on mémorise temporairement les blocs de données pour chaque liaison de données,
- on fixe pour chaque liaison de données un taux de bloc de données,
- on prévoit pour chaque liaison de données un compteur, caractérisé en ce que
- on libère les liaisons de données, dont les compteurs ont atteint un état plus bas qu'un état prescrit de comptage, pour retransmettre un bloc de données sur la ligne de jonction,
- on retransmet, pour une liaison de données, dont le créneau temporel actuel a un état de comptage minimum, un bloc de données provenant de la mémoire-tampon associée sur la ligne de jonction,
- on incrémente l'état de comptage de la liaison de données, pour laquelle on a retransmis pendant un créneau temporel actuel un bloc de données sur la ligne de jonction, d'une valeur correspondant au taux associé de bloc de données,
- on décrémente l'état de comptage des liaisons de données, pour lesquelles on ne retransmet pas de bloc de données pendant un créneau temporel actuel.

2. Procédé suivant la revendication 1, dans lequel on met en paquet dans la partie des données d'une cellule d'information les blocs de données après la libération et avant la retransmission sur la ligne de jonction.

3. Procédé suivant la revendication 1, caractérisé en ce que les blocs de données font partie d'une cellule d'information.

4. Procédé suivant l'une des revendications précédentes, dans lequel on fixe pour chaque liaison de données le même taux de bloc de données.

5. Procédé suivant l'une des revendications précédentes, dans lequel les blocs de données ont chacun le nombre de données que peut recevoir la partie de données d'une cellule d'information.

6. Procédé suivant l'une des revendications précédentes, dans lequel on mémorise temporairement des blocs de données non encore retransmis.

7. Procédé suivant la revendication 6, dans lequel on mémorise temporairement les blocs de données séparément pour chaque liaison de données.
